# DEMANDE DE BREVET EUROPEEN

(11) **EP 2 192 588 A1**
(43) Date de publication de la demande: **02.06.2010**
(21) Numéro de dépôt: 09176750.9
(22) Date de dépôt: 23.11.2009
(51) Int. Cl.: G11B 33/04

(54) **Classeur cartonné pour le rangement de disques optiques**

(30) Priorité: 01.12.2008 FR 0858160
(71) Demandeur: Wirton, M. Bernard, 27300 Bernay (FR); Peltier, épouse Wirton, Pascale, 27300 Bernay (FR)
(72) Inventeur: Wirton, Bernard, 27300 Bernay (FR)
(74) Mandataire: Kohn, Philippe

(57) **Abrégé**

L'invention propose un classeur de rangement de disques comportant des éléments (22) de réception de disques pivotants autour d'un axe (24), **caractérisé en ce que** chaque élément (22) de réception comporte une première couche cartonnée (28), dont une première découpe périphérique (34) correspondant au contour général de l'élément (22), une deuxième couche cartonnée (30), collée sur la première couche (28), dont une deuxième découpe (36) externe correspond au contour général de l'élément (22) et dont une troisième découpe (38) interne reçoit un disque, et une troisième couche cartonnée (32), comportant une quatrième découpe (42) périphérique externe correspondant au contour général de l'élément, et qui est collée sur la deuxième couche (30).

## Description

L'invention concerne un classeur pour le rangement d'au moins deux disques optiques.

L'invention concerne un classeur pour le rangement d'au moins deux disques optiques de type CD-ROM ou DVD-ROM comportant un perçage central, ledit classeur comportant au moins un boîtier dont un logement interne débouche à la surface dudit boîtier par l'intermédiaire d'une ouverture sensiblement rectangulaire, ledit logement recevant au moins deux éléments de réception des disques, dont chacun est monté pivotant autour d'un axe commun d'articulation agencé transversalement dans le logement à proximité de l'ouverture entre une première position de rangement dans laquelle il est escamoté à l'intérieur du logement, et une positon d'extraction dans laquelle il est pivoté autour de son axe et fait saillie à l'extérieur du logement pour permettre la préhension du disque.

On connaît de nombreux exemples de classeurs de ce type.

Dans un tel classeur, chaque élément de réception est réalisé sous la forme d'une plaque en matériau plastique injecté comportant une empreinte correspondant à la forme d'un disque et comportant un moyen de centrage destiné à être reçu sans jeu dans le perçage du disque afin de l'immobiliser. Le moyen de centrage est généralement constitué d'un moyeu expansible radialement, permettant d'immobiliser le disque par l'intermédiaire de son perçage.

Le boîtier d'un tel classeur est généralement lui aussi réalisé en un matériau plastique.

Le coût de fabrication d'un tel classeur est donc sensiblement élevé.

Un tel classeur est par ailleurs très lourd, de sorte que le transport d'un nombre élevé de classeurs peut constituer une opération très fastidieuse.

L'invention remédie à cet inconvénient en proposant un classeur du type décrit précédemment, qui est réalisé à base de carton.

Ce classeur présente l'avantage d'être léger, d'un coût de fabrication particulièrement réduit et est particulièrement écologique car biodégradable en fin de vie.

Dans ce but, l'invention propose un classeur du type décrit précédemment, **caractérisé en ce que** chaque élément de réception est conformé sous la forme d'une chemise réalisée en carton comportant :
- une première couche cartonnée, qui comporte une première découpe périphérique correspondant au contour général de l'élément, qui constitue une paroi dite de fond, et un perçage de réception de l'axe commun,
- une deuxième couche cartonnée, d'une épaisseur au moins égale à celle d'un disque, qui est collée sur la première couche, qui comporte une deuxième découpe externe périphérique correspondant au contour général de l'élément et une troisième découpe interne ouverte, agencée sensiblement à l'opposé d'un perçage de réception de l'axe commun et débouchant dans la périphérie de la découpe externe de la deuxième couche, dont au moins une partie dite de réception présente la forme d'un demi-disque, pour constituer une paroi dite de réception permettant d'immobiliser un disque dans ladite troisième découpe,
- une troisième couche cartonnée, qui comporte une quatrième découpe périphérique externe correspondant au contour général de l'élément, un perçage de réception de l'axe commun, et qui est collée sur la deuxième couche.

Selon d'autres caractéristiques de l'invention :
- la troisième couche cartonnée est dite paroi de préhension et comporte une cinquième découpe interne ouverte débouchant dans la périphérie libre de la quatrième découpe externe de la troisième couche, d'une largeur maximale inférieure au diamètre d'un disque, dont au moins une partie s'étend vers l'intérieur de la troisième couche au droit d'une zone de la troisième découpe interne de la deuxième couche correspondant à l'emplacement d'un perçage central du disque, pour en faciliter la préhension par l'index d'un utilisateur,
- la cinquième découpe interne de la troisième couche est conformée sensiblement sous la forme d'un "V" ou d'un "U" comportant deux branches réunies par un rayon de courbure qui est centré sur la zone de la troisième découpe interne (38) de la deuxième couche correspondant à l'emplacement d'un perçage central du disque,
- le contour général de chaque élément est constitué de bords rectilignes réunis par des rayons de courbure déterminés, pour proposer un contour exempt d'angles saillants et/ou concaves, afin d'éviter le coincement de deux éléments voisins lors de leur rotation relative au contact l'un de l'autre,
- le logement interne du boîtier est sensiblement parallélépipédique et le contour général de l'élément comporte au moins des premier et second bords rectilignes perpendiculaires, dont des premières extrémités se rejoignent à proximité de l'axe commun d'articulation, et un troisième bord reliant des secondes extrémités des premier et second bords, le premier bord étant destiné à s'étendre contre une paroi interne du logement et le second bord étant destiné à s'étendre parallèlement au plan de l'ouverture du logement en position de rangement de l'élément de réception,
- au moins un élément de réception sur deux comporte, à proximité de la seconde extrémité du second bord rectiligne, un onglet de sélection, qui est formé par superposition de trois excroissances conformes formées dans les découpes externes des trois couches, qui est destiné à faire saillie en avant de l'ouverture du logement en position de rangement de l'élément de réception,
- les parois internes du logement du boîtier sont réalisées en carton et au moins deux parois latérales opposées agencées de part et d'autre des éléments de réception sont susceptibles d'être déformées élastiquement pour être écartées l'une de l'autre avec un jeu déterminé.
- l'axe commun d'articulation des éléments de réception est fixé entre deux plaques cartonnées opposées et l'ensemble des plaques et de l'axe est reçu par emboîtement dans le logement du boîtier, l'ensemble des plaques et de l'axe étant notamment monté à force en écartant les deux parois latérales opposées agencées de part et d'autre des éléments de réception et les plaques s'emboîtant dans des découpes conformes pratiquées dans lesdites parois latérales opposées,
- l'axe commun d'articulation des éléments de réception est fixé aux plaques par l'intermédiaire de punaises dont les pointes traversent les plaques et sont reçues dans les extrémités opposées dudit axe,
- les première et troisième couches sont chacune d'une épaisseur sensiblement inférieure à celle de la deuxième couche pour provoquer une adhérence spontanée dite "effet ventouse" entre lesdites première et troisième couches et le disque au droit de la troisième découpe interne ouverte de la deuxième couche,

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble en perspective d'un classeur selon l'invention ;
- la figure 2 est une vue en perspective éclatée d'un premier type d'un élément de réception selon l'invention,
- la figure 3 est une vue en perspective éclatée d'un premier type d'un élément de réception selon l'invention,
- la figure 4 est une vue de dessus de la deuxième couche d'un élément de réception et d'un d'outils emporte-pièce associé,
- la figure 5 est une vue de dessus de la troisième couche d'un élément de réception et d'un d'outils emporte-pièce associé,
- la figure 6 est une vue en perspective éclatée d'un classeur selon l'invention,
- la figure 7 est une vue de dessus assemblée d'un élément de réception.

Dans la description qui va suivre, des chiffres de référence identiques désignent des pièces identiques ou ayant des fonctions similaires.

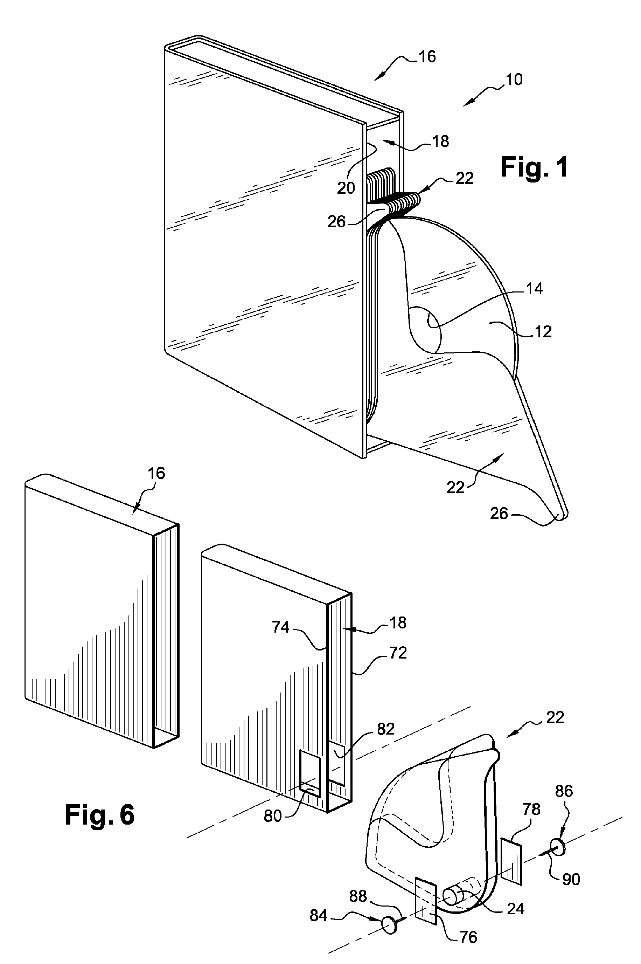

On a représenté à la figure 1 un classeur 10 pour le rangement d'au moins deux disques optiques du type d'un disque 12, c'est-à-dire un disque 12 de type CD-ROM ou DVD-ROM comportant un perçage central 14.

De manière connue, le classeur 10 comporte au moins un boîtier 16 dont un logement interne 18 débouche à la surface dudit boîtier 16 par l'intermédiaire d'une ouverture 20 sensiblement rectangulaire.

Le boîtier 16 est, par exemple et de manière non limitative de l'invention, un boîtier 16 de forme sensiblement parallélépipédique recevant un logement 18 lui aussi parallélépipédique, mais cette configuration n'est pas limitative de l'invention, le boîtier 16 et le logement 18 pouvant prendre d'autre formes.

De manière connue, le logement 18 reçoit au moins deux éléments 22 de réception des disques 12 dont chacun est monté pivotant autour d'un axe 24 commun d'articulation agencé transversalement dans le logement 18 à proximité de l'ouverture 20. De la sorte, chaque élément est mobile entre une première position de rangement dans laquelle il est escamoté à l'intérieur du logement 18 et une position d'extraction dans laquelle il fait saillie hors du logement 18, comme représenté à la figure 1.

De préférence, au moins un élément de réception sur deux comporte un onglet de sélection 26 qui fait saillie hors du logement 18 en position de rangement.

On remarquera que deux éléments 22 de réception consécutifs peuvent comporter des onglets 26 de sélection, pourvu que ceux-ci soient décalés l'un par rapport à l'autre afin de permettre la sélection de l'un ou l'autre des éléments 22 de réception.

Un tel classeur 10 est largement connu de l'état de la technique.

Conventionnellement chaque élément 22 de réception est réalisé sous la forme d'une plaque en matériau plastique injecté comportant une empreinte correspondant à la forme d'un disque 12 et comportant un moyen de centrage destiné à être reçu sans jeu dans le perçage 14 du disque 12 afin de l'immobiliser.

Le boîtier 16 d'un tel classeur 10 est généralement lui aussi réalisé en un matériau plastique.

Le coût de fabrication d'un tel classeur 10 est donc sensiblement élevé.

L'invention remédie à cet inconvénient en proposant un classeur 10 du type décrit précédemment, qui est réalisé à base de carton.

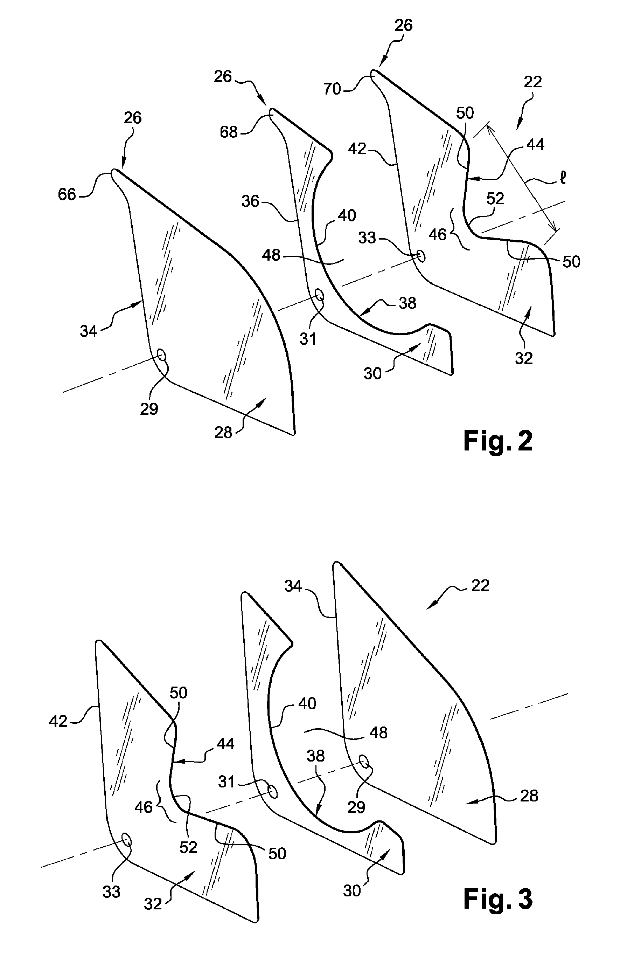

Dans ce but, comme l'illustrent les figures 2 et 3, chaque élément de réception 22 est conformé sous la forme d'une chemise réalisée en carton comportant trois couches 28, 30 et 32 superposées.

A cet effet, une première couche cartonnée 28 comporte une première découpe périphérique 34 correspondant au contour général de l'élément 22 et un perçage 29 destiné à recevoir l'axe 24 commun d'articulation. Cette première couche 28 constitue une paroi dite de fond de l'élément de réception 22.

Une deuxième couche cartonnée 30 de l'élément 22 est réalisée dans un carton présentant une épaisseur au moins égale à celle d'un disque. Cette couche 30 est collée sur la première couche 28. Elle comporte une deuxième découpe externe 36 périphérique correspondant au contour général de l'élément 22, un perçage 31 destiné à recevoir l'axe 24 commun d'articulation et une troisième découpe 38 interne ouverte, agencée sensiblement à l'opposé du perçage 31, qui débouche dans la périphérie de la découpe externe 36 de la deuxième couche 30.

Au moins une partie 40 dite de réception de la troisième découpe 38 présente la forme d'un demi-disque, pour constituer une paroi dite de réception permettant d'immobiliser un disque 12 dans ladite troisième découpe,

Une troisième couche 32 cartonnée de l'élément 22 comporte une quatrième découpe périphérique 42 externe correspondant au contour général de l'élément, un perçage 33 de réception de l'axe commun, et est collée sur la deuxième couche 30.

De préférence, comme l'illustrent les figures 2 et 3, la troisième couche cartonnée 32, dite "paroi de préhension" comporte une cinquième découpe interne ouverte 44 débouchant dans la périphérie libre de la quatrième découpe externe 42 de la troisième couche 32, qui est d'une largeur maximale "1" inférieure au diamètre d'un disque 12, et dont au moins une partie 46 s'étend vers l'intérieur de la troisième couche 32 au droit d'une zone 48 de la troisième découpe interne 38 de la deuxième couche 30 correspondant à l'emplacement du perçage central 14 du disque 12, pour en faciliter la préhension par l'index d'un utilisateur.

Un utilisateur peut donc extraire aisément le disque 12 hors de l'élément 22 constitué des trois couches 28, 30, 32, en introduisant l'index dans le perçage 14, accessible par la cinquième découpe 44.

De préférence, comme l'illustrent les figures 2 et 3, la cinquième découpe interne 44 de la troisième couche 32 est conformée sensiblement sous la forme d'un "V" ou d'un "U" comportant deux branches 50 réunies par un rayon 52 de courbure qui est centré sur la zone de la troisième découpe 38 interne de la deuxième couche 30 correspondant à l'emplacement du perçage central 14 du disque 12, mais cette configuration n'est pas limitative de l'invention.

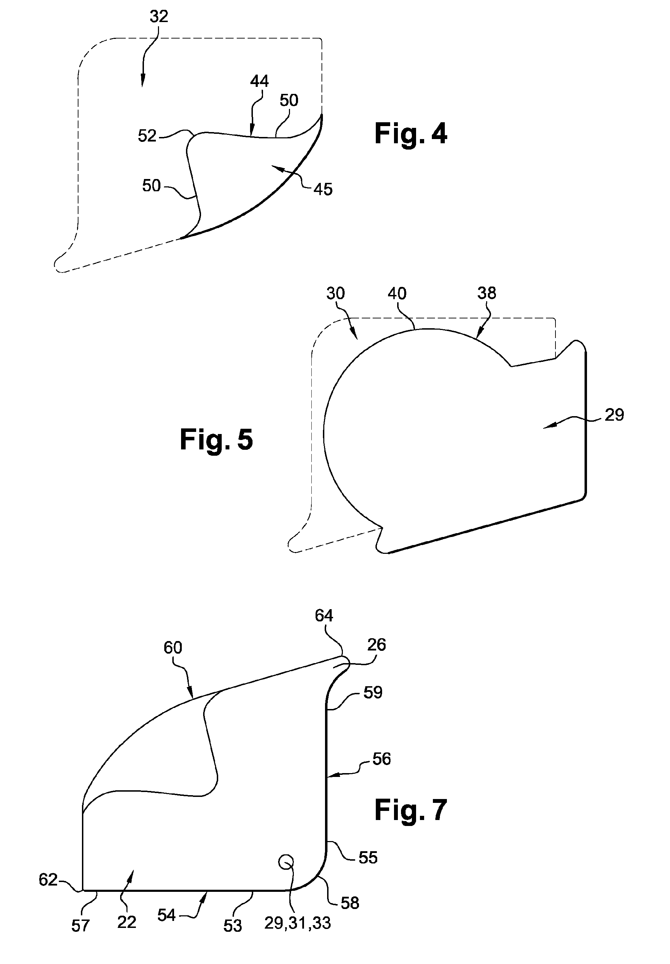

La troisième découpe 38 de la deuxième couche 30 et cinquième découpe 44 de la troisième couche 32 peuvent par exemple être réalisés à l'aide d'outils emporte-pièce associés 29 et 45, comme représenté aux figures 4 et 5.

Dans le mode de réalisation préféré de l'invention, les première et troisième couches 28, 32 sont chacune d'une épaisseur sensiblement inférieure à celle de la deuxième couche 30. Cette configuration permet de provoquer une adhérence spontanée dite "effet ventouse" entre lesdites première et troisième couches 28, 32 et le disque 12 au droit de la troisième découpe interne 38 ouverte de la deuxième couche 30, afin d'éviter tout échappement intempestif du disque 12 hors de l'élément 22 en position d'extraction.

Il sera par ailleurs compris que le classeur 10 selon l'invention est destiné à comporter une pluralité d'éléments 22 de réception, au nombre par exemple d'une dizaine. Il est donc nécessaire que ces éléments 22 soient à même de pivoter en glissant les uns sur les autres sans interférer les uns avec les autres.

A cet effet, comme l'illustre la figure 7, le contour général de chaque élément 22 est constitué de bords rectilignes 54, 56 réunis par des rayons de courbure 58, 60, 62, 64 déterminés, pour proposer un contour exempt d'angles saillants et/ou concaves, afin d'éviter le coincement de deux éléments 22 voisins lors de leur rotation relative au contact l'un de l'autre.

Plus particulièrement, les éléments 22 sont associés à un logement interne 18 du boîtier qui est sensiblement parallélépipédique.

De ce fait, le contour général de l'élément 22 comporte au moins des premier et second bords rectilignes 54, 56 perpendiculaires, dont des premières extrémités 53, 55 se rejoignent par l'intermédiaire d'un rayon de courbure 58 à proximité du perçage de l'axe commun d'articulation formé de la superposition des perçages 29, 31 et 33, et un troisième bord 60 reliant des secondes extrémités 57, 59 des premier et second bords 54, 56 par l'intermédiaire de rayons de courbure associés 62 et 64.

Ainsi, en position de rangement de l'élément de réception, le premier bord 54 est notamment destiné à s'étendre contre une paroi interne 62 du logement 18 et le second bord 56 est destiné à s'étendre parallèlement au plan "P" de l'ouverture 20 du logement 18 qui ont été représentés à la figure 6.

De préférence, comme l'illustre la figure 2, au moins un élément 22 de réception sur deux comporte, à proximité de la seconde extrémité 59 du second bord rectiligne 56, un onglet 26 de sélection, qui est formé par superposition de trois excroissances 66, 68 et 70 conformes formées dans les découpes externes 34, 36, 42 des trois couches 28, 30, 32, qui est destiné à faire saillie en avant de l'ouverture 20 du logement en position de rangement de l'élément 22 de réception.

Bien entendu, chaque élément de réception peut comporter un onglet 26 de sélection, pourvu qu'il soit décalé de l'onglet de sélection de l'élément 22 de réception voisin, c'est-à-dire non aligné avec ce dernier en position de rangement de l'élément 22 de réception.

Dans le mode de réalisation préféré de l'invention, les parois internes du logement 18 du boîtier 16 sont réalisées en carton.

Le mode de réalisation du boîtier 16 importe peu mais l'on peut imaginer qu'i soit lui aussi réalisé en carton et soit destiné à recevoir intérieurement un logement rapporté 18 réalisé en carton, comme représenté à la figure 6.

Le pliage du logement 18 pouvant être effectué de diverses manières, il ne sera pas décrit de manière plus explicite dans la suite de la présente description.

Conformément à l'invention, comme l'illustre la figure 6, au moins deux parois latérales 72, 74 opposées du logement 18, agencées de part et d'autre des éléments de réception 22 sont susceptibles d'être déformées élastiquement pour être écartées l'une de l'autre avec un jeu déterminé.

Cette disposition permet, comme on va le voir, d'introduire entre ces parois 72, 74, l'axe 24 d'articulation des éléments 22 de réception.

A cet effet, l'axe 24 commun d'articulation des éléments de réception est fixé entre deux plaques cartonnées 76, 78 opposées et l'ensemble constitué des plaques 76, 78 et de l'axe 24 est reçu par emboîtement dans le logement 18 du boîtier.

En effet, l'ensemble des plaques 76, 78 et de l'axe 24 est notamment monté à force en écartant les deux parois latérales 72, 74 opposées agencées de part et d'autre des éléments 22 de réception et en introduisant les plaques 76, 78 dans des découpes conformes 80, 82 pratiquées dans les parois latérales 72, 74 opposées.

Les plaques 76,78 s'emboîtent donc spontanément dans les découpes 80, 82 des parois 72, 74 du boîtier 18 dès lors que l'écartement desdites parois 72 ,74 est relâché.

De préférence, l'axe 24 commun d'articulation des éléments de réception est réalisé de manière simple en bois. Il est ensuite fixé aux plaques 76, 78 par l'intermédiaire de punaises 84, 86 dont les pointes 88, 90 traversent les plaques 76, 78 et sont reçues dans les extrémités opposées dudit axe 24.

L'invention propose donc un classeur réalisé à partir de carton, qui présente l'avantage d'être considérablement plus léger qu'un classeur conventionnel réalisé en un matériau plastique.

Cette caractéristique est particulièrement avantageuse dans le cas d'un transport d'un nombre élevé de classeurs.

Le classeur faisant l'objet de l'invention présente aussi l'avantage de présenter un coût de fabrication réduit, de sorte qu'il peut par exemple être proposé à la vente à bas prix et/ou complément de disques vierges.

Enfin, le classeur selon l'invention présente l'avantage d'être biodégradable, puisque réalisé à partir de carton.

## Revendications

1. Classeur (10) pour le rangement d'au moins deux disques optiques (12) de type CD-ROM ou DVD-ROM comportant un perçage central (14), ledit classeur (10) comportant au moins un boîtier (16) dont un logement interne (18) débouche à la surface dudit boîtier (16) par l'intermédiaire d'une ouverture (20) sensiblement rectangulaire, ledit logement (18) recevant au moins deux éléments (22) de réception des disques (12), dont chacun est monté pivotant autour d'un axe (24) commun d'articulation agencé transversalement dans le logement (18) à proximité de l'ouverture (20) entre une première position de rangement dans laquelle il est escamoté à l'intérieur du logement (18), et une positon d'extraction dans laquelle il est pivoté autour de son axe (24) et fait saillie à l'extérieur du logement (18) pour permettre la préhension du disque (12),
**caractérisé en ce que** chaque élément (22) de réception est conformé sous la forme d'une chemise réalisée en carton comportant :
- une première couche cartonnée (28), qui comporte une première découpe périphérique (34) correspondant au contour général de l'élément (22), qui constitue une paroi dite de fond, et un perçage (29) de réception de l'axe (24) commun,
- une deuxième couche cartonnée (30), d'une épaisseur au moins égale à celle d'un disque (12), qui est collée sur la première couche (28), qui comporte une deuxième découpe (36) externe périphérique correspondant au contour général de l'élément (22) et une troisième découpe (38) interne ouverte, agencée sensiblement à l'opposé d'un perçage (31) de réception de l'axe commun (24) et débouchant dans la périphérie de la découpe externe (36) de la deuxième couche (30), dont au moins une partie dite de réception (40) présente la forme d'un demi-disque, pour constituer une paroi dite de réception permettant d'immobiliser un disque 12 dans ladite troisième découpe (38),
- une troisième couche cartonnée (32), qui comporte une quatrième découpe (42) périphérique externe correspondant au contour général de l'élément, un perçage (33) de réception de l'axe commun, et qui est collée sur la deuxième couche (30).

2. Classeur (10) selon la revendication précédente, **caractérisé en ce que** la troisième couche (32) cartonnée est dite paroi de préhension et comporte une cinquième découpe (44) interne ouverte débouchant dans la périphérie libre de la quatrième découpe (42) externe de la troisième couche (30), d'une largeur maximale (I) inférieure au diamètre d'un disque (12), dont au moins une partie (46) s'étend vers l'intérieur de la troisième couche (32) au droit d'une zone (48) de la troisième découpe interne (38) de la deuxième couche (30) correspondant à l'emplacement d'un perçage central (14) du disque (12), pour en faciliter la préhension par l'index d'un utilisateur.

3. Classeur (10) selon la revendication précédente, **caractérisé en ce que** la cinquième découpe (44) interne de la troisième couche (32) est conformée sensiblement sous la forme d'un "V" ou d'un "U" comportant deux branches (5) réunies par un rayon de courbure (52) qui est centré sur la zone (48) de la troisième découpe interne (38) de la deuxième couche (30) correspondant à l'emplacement d'un perçage central (14) du disque (12).

4. Classeur (10) selon l'une quelconque des revendications précédentes, **caractérisé en ce que** le contour général de chaque élément (22) est constitué de bords rectilignes (54, 56) réunis par des rayons de courbure (58, 60, 62, 64) déterminés, pour proposer un contour exempt d'angles saillants et/ou concaves, afin d'éviter le coincement de deux éléments (22) voisins lors de leur rotation relative au contact l'un de l'autre.

5. Classeur (10) selon la revendication précédente, **caractérisé en ce que** le logement interne (18) du boîtier est sensiblement parallélépipédique et **en ce que** le contour général de l'élément comporte au moins des premier et seconds bords (54, 56) rectilignes perpendiculaires, dont des premières extrémités (53, 55) se rejoignent à proximité de l'axe (24) de commun d'articulation, et un troisième bord (60) reliant des secondes extrémités (57, 59) des premier et second bord, le premier bord (54) étant destiné à s'étendre contre une paroi interne (62) du logement et le second bord étant destiné à s'étendre parallèlement au plan de l'ouverture (20) du logement (18) en position de rangement de l'élément (22) de réception.

6. Classeur (10) selon l'une quelconque des revendications précédentes, **caractérisé en ce qu'**au moins un élément (22) de réception sur deux comporte, à proximité de la seconde extrémité (59) du second bord rectiligne (56), un onglet (26) de sélection, qui est formé par superposition de trois excroissances (66, 68, 70) conformes formées dans les découpes externes (34, 36, 42) des trois couches (28, 30, 32), qui est destiné à faire saillie en avant de l'ouverture (20) du logement en position de rangement de l'élément (12) de réception.

7. Classeur (10) selon l'une quelconque des revendications précédentes, **caractérisé en ce que** les parois internes du logement (18) du boîtier (16) sont réalisées en carton et **en ce qu'**au moins deux parois latérales (72, 74) opposées agencées de part et d'autre des éléments (22) de réception sont susceptibles d'être déformées élastiquement pour être écartées l'une de l'autre avec un jeu déterminé.

8. Classeur (10) selon la revendication précédente, **caractérisé en ce que** l'axe (24) commun d'articulation des éléments de réception est fixé entre deux plaques (76, 78) cartonnées opposées et **en ce que** l'ensemble des plaques (76, 78) et de l'axe (24) est reçu par emboîtement dans le logement (18) du boîtier (16), l'ensemble des plaques (76, 78) et de l'axe (24) étant notamment monté à force en écartant les deux parois (72, 74) latérales opposées agencées de part et d'autre des éléments de réception et les plaques (76, 78) s'emboîtant dans des découpes conformes (80, 82) pratiquées dans lesdites parois (72, 74) latérales opposées.

9. Classeur (10) selon la revendication précédente, **caractérisé en ce que** l'axe (24) commun d'articulation des éléments de réception est fixé aux plaques par l'intermédiaire de punaises (84, 86) dont les pointes (88, 90) traversent les plaques (76, 78) et sont reçues dans les extrémités opposées dudit axe (24).

10. Classeur (10) selon l'une quelconque des revendications précédentes, **caractérisé en ce que** les première et troisième couches (28, 32) sont chacune d'une épaisseur sensiblement inférieure à celle de la deuxième couche (30) pour provoquer une adhérence spontanée dite "effet ventouse" entre lesdites première et troisième couches (28, 32) et le disque (12) au droit de la troisième découpe interne ouverte (38) de la deuxième couche (30).
